# EUROPEAN PATENT SPECIFICATION

(11) **EP 1 578 112 B1**
(45) Date of publication and mention of the grant of the patent: **22.11.2006**
(21) Application number: 05101608.7
(22) Date of filing: 02.03.2005
(51) Int. Cl.: H04N 5/14, H04N 5/208

(54) **Method and apparatus for enhancing contours in an image**
Verfahren und Gerät zur Konturverbesserung in einem Bild
Procédé et appareil de réhaussement des contours dans une image

(30) Priority: 17.03.2004 FR 0402770
(43) Date of publication of application: 21.09.2005
(73) Proprietor: Thomson Licensing, 92100 Boulogne-Billancourt (FR)
(72) Inventor: Blonde, Laurent, 92648 BOULOGNE CEDEX (FR); Doyen, Didier, 92648 BOULOGNE CEDEX (FR); Montalvo, Luis, 92648 BOULOGNE CEDEX (FR)
(74) Representative: Le Dantec, Claude

(56) References cited:
- EP-A- 0 921 677
- EP-A- 0 973 330
- EP-A- 1 227 668
- WO-A-00/22573
- KISWORO M ET AL: "2-D Edge Feature Extraction To Subpixel Accuracy Using The Generalized Energy Approach" PROCEEDINGS OF THE INTERNATIONAL CONFERENCE ON EC-3 ENERGY, COMPUTER, COMMUNICATION AND CONTROL SYSTEMS - TENCOM, U.S. NEW YORK, vol. 3, 28 August 1991 (1991-08-28), pages 344-348, XP010282899

## Description

The present invention relates to a method for enhancing contours in a video image. It applies more particularly to cathode-ray tube digital televisions.

Within tube-type analogue televisions, the BSVM function (standing for Beam Scan Velocity Modulation) is conventionally employed to enhance the contours in the images displayed by the television. This technique consists in reducing the scan speed of the electron beam or beams during the display of the contours. To do this, the strong transitions of the video signal are firstly detected. The beams are thereafter slowed at the instants corresponding to the contours detected and accelerated just before and/or just after so as to recover the image frequency. This slowing of the beams has two consequences: the edge of the transition is steeper and the intensity of the transition is increased.

In digital televisions, certain functions formerly carried out by analogue circuits are carried out by digital circuits. However, some of these digital functions may render certain potentially remaining analogue functions inapplicable. Such is the case for the BSVM function. The use of a digital correction of the distortions for each of the colours renders the BSVM function inapplicable in tube-type digital televisions. Specifically, since the correction may be different for each of the three colours, this amounts to simultaneously returning three different images onto the screen of the television. The contours in the red, green and blue images are not superimposed since these images are distorted differently. The three colours being scanned simultaneously, it is not possible to know when to slow the beams down since a contour detected in an image is not necessarily found again in the other two colour images. If a slowing is applied in phase with one of the colours, the consecutive accelerations may be poorly placed in respect of the other colours and reduce their resolution. The BSVM function is therefore not applicable to tube-type digital televisions on account of the digital distortion correction.

Document WO-A-00/22573 describes an imaging method to get a sharp definition of image contours where the optimal edge position of a discontinuity in a smeared image is estimated by means of an image processing involving the convolution of the image object with a point-spread function.

An aim of the invention is to propose a method for enhancing the contours in tube-type digital televisions.

The subject of the invention is a method for enhancing the contours of a video image displayed by a cathode-ray tube, characterized in that it comprises the following steps:
- detecting the contours in the image,
- sampling the signal of the image at a frequency which is a multiple of the pixel frequency;
- modifying the sampled signal in such a way as to increase, for each contour detected, the video level of at least one of the samples of the pixel corresponding to said contour, the overall luminous energy of said pixel being preserved, and
- converting said modified sampled signal into an analogue signal which is provided to the cathode-ray tube.

According to a first embodiment, to modify the signal, N sample(s) is (are) removed from the pixel corresponding to each contour detected, N being greater than or equal to 1 and less than the total number of samples of the pixel, the video level of the sample or samples removed being distributed among the other samples of said pixel so as to preserve the luminous energy of said pixel, and samples are added to at least one of the adjacent pixels belonging to the same line of pixels as the contour pixel, the total number of samples added being equal to N, and the overall luminous energy of each of said adjacent pixels being preserved.

Preferably, the N samples are added to a single adjacent pixel this pixel advantageously being the one having the greatest difference in video level with the contour pixel.

According to a second embodiment, to modify the signal, the video level of the first M or last M samples of the pixel corresponding to a contour detected is increased, M being greater than or equal to 1 and less than the total number of samples of the pixel, and the video level of the remaining samples of the pixel is lowered so as to preserve the luminous energy of said pixel. The video level of the M samples is preferably increased by the same quantity.

In this embodiment, the video level of the first M samples is increased if the difference in video level between the pixel of the contour and the pixel which precedes it on the same line is greater than that between said contour pixel and the pixel which follows it on the same line, and in that the video level of the last M samples of the pixel is increased otherwise.

The invention concerns also a device for enhancing the contours of a video image, characterized in that it comprises:
- a detector detecting the contours in the image,
- a sampler for sampling the signal of the image at a frequency which is a multiple of the pixel frequency;
- a computing unit for modifying the sampled signal in such a way as to increase, for each contour detected, the video level of at least one of the samples of the pixel corresponding to said contour, the overall luminous energy of said pixel being preserved, and
- a digital/analog converter for converting said modified sampled signal into an analogue signal which is provided to the cathode-ray tube.

The invention will be better understood on reading the description which follows, given by way of nonlimiting example, and with reference to the appended figures among which:
- Figure 1 illustrates a first embodiment of the method of the invention;
- Figure 2 illustrates a second embodiment of the method of the invention, and
- Figure 3 illustrates a device implementing the method of figure 1 or 2.

In a general manner, the invention consists in detecting the contours in the images, in oversampling the image signal to be provided to the tube, in increasing the video level of at least one of the samples of the pixels corresponding to a contour while preserving the luminous energy of each of the pixels, then in converting the modified signal into an analogue signal intended for the cathode-ray tube. The contours then appear finer and more visible on the screen of the television.

The enhanced contours are vertical or oblique when the image is scanned horizontally in the cathode ray tube and horizontal and also oblique when the image is scanned vertically.

The method of the invention consists first of all in detecting the contours in the current image. To do this, the image is filtered by a filter that detects bright contours, for example a filter of (-1, 2, -1) type, then advantageously processed by a thresholding operation. This operation makes it possible to accurately define the zone involved in the enhancing of the contours. More elaborate filters may be employed.

The Canny Deriche filtering, well known in video processing, is for example an excellent contour detector.

The video signal is thereafter sampled line by line at a frequency which is a multiple of the pixel frequency of the starting video signal. The signal is for example sampled four times per pixel. The samples or subpixels of the sampled signal corresponding to the contours detected are thereafter modified according to one of the following processes.

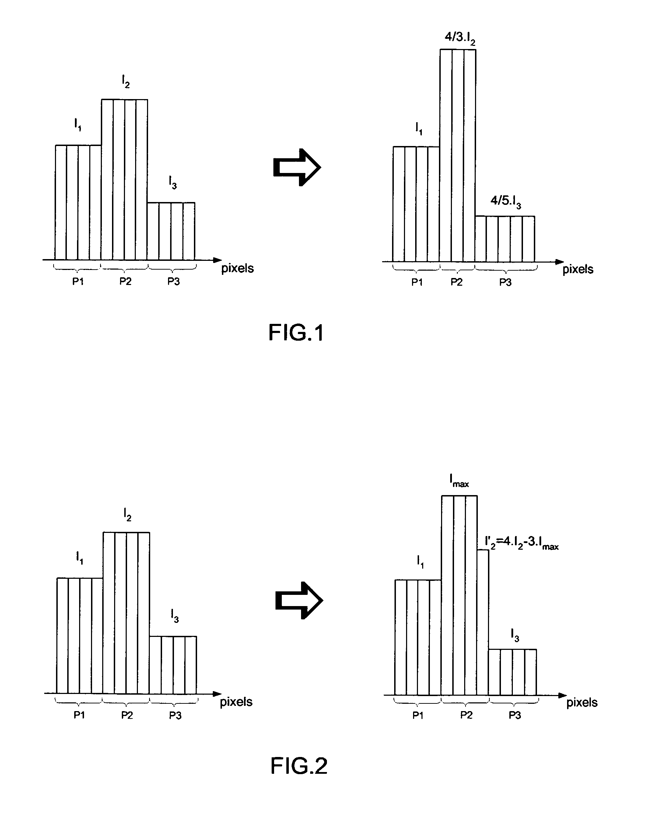

According to a first embodiment, the number of samples of the pixel or pixels corresponding to the contours detected is reduced while enhancing their intensity in such a way that the luminous energy of the contours is preserved. This principle is illustrated by Figure 1. The left part of this figure represents three consecutive pixels P1, P2, P3 of one and the same line having respective intensities I₁, I₂ and I₃. Pixel P2 represents a contour and to this end exhibits a greater intensity than that of the pixels P1 and P3. These pixels are sampled at a frequency four times greater than the pixel frequency. They therefore each comprise four samples. According to the invention, the number of samples of pixel P2 is cut to three and the intensity of its samples goes from I₂ to 4/3·I₂. This operation is illustrated by the right part of the figure. The number of samples of one of the pixels P1, P3 is incremented by 1 to compensate for the loss of a sample for pixel P2. In the example of Figure 1, a sample is added to the pixel P3. The intensity of the samples of pixel P3 is then cut from I₃ to 4/5·I₃ so as to preserve the luminous energy associated with this pixel.

Preferably, the pixel whose number of samples is incremented to compensate for the removal of sample in the contour pixel is that representing the largest difference in intensity with the contour pixel. Such is the case for pixel P3 in Figure 1.

It is of course possible to envisage removing more samples from pixel P2 and adding as many thereof to one or other of pixels P1 and P3.

According to a second embodiment, instead of reducing the number of samples of the pixel, this number can be preserved. The video level of the first M or last M samples of the pixel of the contour detected is then increased, M being less than the total number of samples per pixel, and the level of the remaining samples of the pixel is lowered so as to preserve the luminous energy of the pixel.

This embodiment is more particularly used when the first embodiment is not applicable, for example when the value of 4/3·I₂ exceeds the maximum intensity Iₘₐₓ displayable by the television. This case is illustrated by Figure 2. In this embodiment, the intensity Iₘₐₓ is assigned to the first three samples of pixel P2 and the intensity I'₂=4·I₂-3·Iₘₐₓ is assigned to the last sample of the pixel. Pixels P1 and P3 are not modified.

It is also possible to envisage assigning an intensity I"₂ to the first three samples of pixel P2, with I₂<I"₂<Iₘₐₓ, and an intensity I'₂=4·I₂-3.I"₂ to the last sample of the pixel. The value I"₂ is advantageously determined such that 4·I₂-3·I"₂ is greater than I₃.

Ultimately, the modified signal is converted into an analogue signal by a digital/analogue converter operating at four times the original pixel frequency. This analogue signal is provided to the cathode-ray tube.

Of course, the sampling frequency value and the number M of samples modified in the contour pixel that are given in Figures 1 and 2 are given merely by way of example.

Finally, in practice, it should be noted that the processing of the invention should be carried out in a linear space with respect to the viewing space. To do this, a gamma law inverse to that already applied to the video signal is applied and then a gamma law inverse to that of the tube is applied after the processing of the invention.

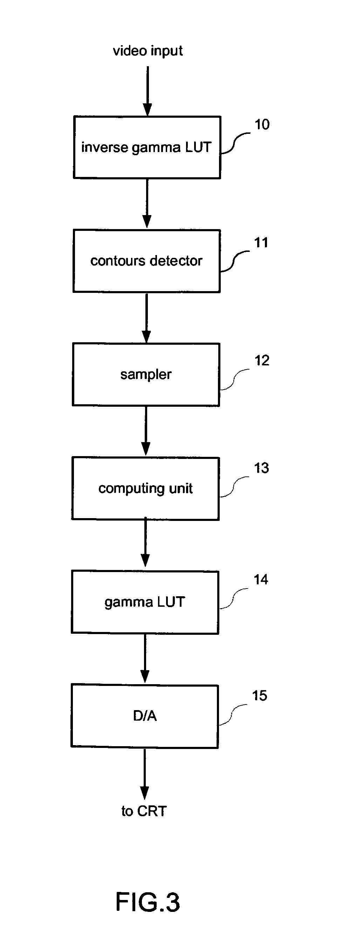

Figure 3 shows a device implementing the method of the invention. As the processing should be carried out in a linear space with respect to the viewing space, it comprised a first LUT 10, called inverse gamma LUT, to apply to the video signal a gamma law inverse to that already applied to the video signal by a camera. The signal is then processed by a contours dectector 11, for example a filter as mentioned before, for detecting the contours in the image. The signal is then oversampled by a sampler 12 at a frequency which is a multiple of the pixel frequency. The sampled signal is then modified by a computing unit 13 to increase the video level of at least one of the samples of the signal. A gamma law is then applied to the signal by a second LUT 14, called gamma LUT. Finally, this signal is converted into an analog signal by a D/A converter 14 and provided to the cathode ray tube.

## Claims

1. Method for enhancing the contours of a video image, **characterized in that** it comprises the following steps:
- detecting the contours in the image,
- sampling the signal of the image at a frequency which is a multiple of the pixel frequency;
- modifying the sampled signal in such a way as to increase, for each contour detected, the video level of at least one of the samples of the pixel corresponding to said contour, the overall luminous energy of said pixel being preserved, and
- converting said modified sampled signal into an analogue signal which is provided to the cathode-ray tube.

2. Method according to Claim 1, **characterized in that**, to modify the signal, N sample(s) is (are) removed from the pixel corresponding to each contour detected, N being greater than or equal to 1 and less than the total number of samples of the pixel, the video level of the sample or samples removed being distributed among the other samples of said pixel so as to preserve the luminous energy of said pixel,
and **in that** samples are added to at least one of the adjacent pixels belonging to the same line of pixels as the contour pixel, the total number of samples added being equal to N, the overall luminous energy of each of said adjacent pixels being preserved.

3. Method according to Claim 2, **characterized in that** the N samples are added to a single adjacent pixel and **in that** said adjacent pixel is the one having the greatest difference in video level with the contour pixel.

4. Method according to Claim 1, **characterized in that**, to modify the signal, the video level of the first M or last M samples of the pixel corresponding to each contour detected is increased, M being greater than or equal to 1 and less than the total number of samples of the pixel, and the video level of the remaining samples of the pixel is lowered so as to preserve the luminous energy of said pixel.

5. Method according to Claim 4, **characterized in that** the video level of the M samples is increased by the same quantity.

6. Method according to Claim 4 or 5, **characterized in that** the video level of the first M samples is increased if the difference in video level between the pixel of the contour and the pixel which precedes it on the same line is greater than that between said contour pixel and the pixel which follows it on the same line, and **in that** the video level of the last M samples of the pixel is increased otherwise.

7. Method according to one of the preceding claims, **characterized in that** the detection of contours is effected through a filtering operation followed by a thresholding operation.

8. Method according to Claim 7, **characterized in that** the filtering corresponds to filtering effected by a filter of the (-1, 2, -1) type.

9. Method according to Claim 7, **characterized in that** the filtering operation corresponds to Canny Deriche filtering.

10. Device for enhancing the contours of a video image, **characterized in that** it comprises:
- a detector (11) detecting the contours in the image,
- a sampler (12) for sampling the signal of the image at a frequency which is a multiple of the pixel frequency;
- a computing unit (13) for modifying the sampled signal in such a way as to increase, for each contour detected, the video level of at least one of the samples of the pixel corresponding to said contour, the overall luminous energy of said pixel being preserved, and
- a digital/analog converter (15) for converting said modified sampled signal into an analogue signal which is provided to the cathode-ray tube.

## Patentansprüche

1. Verfahren zur Verbesserung der Konturen eines Videobildes, **dadurch gekennzeichnet, dass** es die folgenden Schritte umfasst:
Erfassen der Konturen in dem Bild,
Abtasten des Signals des Bilds bei einer Frequenz, die einem Vielfachen der Bildpunktfrequenz entspricht,
Modifizieren des abgetasteten Signals, so dass der Videopegel von wenigstens einem der Abtastwerte des der Kontur entsprechenden Bildpunktes für jede erfasste Kontur angehoben wird, wobei die Gesamtleuchtstärke des Bildpunktes erhalten bleibt, und Umwandeln des modifizierten abgetasteten Signals in ein analoges Signal, das zur Kathodenstrahlröhre geliefert wird.

2. Verfahren nach Anspruch 1, **dadurch gekennzeichnet, dass**, zum Modifizieren des Signals, N Abtastwert/Abtastwerte aus dem jeder erfassten Kontur entsprechenden Bildpunkt entfernt wird/werden, wobei N größer gleich 1 und kleiner als die Gesamtanzahl der Abtastwerte des Bildpunktes ist, wobei der Videopegel des entfernten Abtastwerts oder der entfernten Abtastwerte unter den anderen Abtastwerten des Bildpunktes verteilt werden, so dass die Leuchtstärke des Bildpunktes erhalten bleibt,
und wobei Abtastwerte wenigstens einem der benachbarten Bildpunkte, die zu der gleichen Bildpunktreihe wie der Konturbildpunkt gehören, hinzugefügt werden, wobei die Gesamtanzahl der hinzugefügten Abtastwerte gleich N ist und die Gesamtleuchtstärke jedes benachbarten Bildpunktes erhalten bleibt.

3. Verfahren nach Anspruch 2, **dadurch gekennzeichnet, dass** die N Abtastwerte zu einem einzigen benachbarten Bildpunkt hinzugefügt werden, wobei dieser Bildpunkt jener ist, dessen Videopegel den größten Unterschied zu dem des Konturbildpunktes aufweist.

4. Verfahren nach Anspruch 1, **dadurch gekennzeichnet, dass** zum Modifizieren des Signals der Videopegel der ersten M oder letzten M Abtastwerte des jeder erfassten Kontur entsprechenden Bildpunktes angehoben wird, wobei M größer gleich 1 und kleiner als die Gesamtanzahl von Abtastwerten des Bildpunktes ist und der Videopegel der übrigen Abtastwerte des Bildpunktes so weit gesenkt wird, dass die Leuchtstärke des Bildpunktes erhalten bleibt.

5. Verfahren nach Anspruch 4, **dadurch gekennzeichnet, dass** der Videopegel der M Abtastwerte um den gleichen Betrag angehoben wird.

6. Verfahren nach Anspruch 4 oder 5, **dadurch gekennzeichnet, dass** der Videopegel der ersten M Abtastwerte angehoben wird, wenn der Unterschied des Videopegels zwischen dem Bildpunkt der Kontur und dem Bildpunkt, der diesem in der gleichen Reihe vorangeht, größer ist als der Unterschied zwischen dem Konturbildpunkt und dem Bildpunkt, der diesem in der gleichen Reihe nachfolgt, wobei der Videopegel der letzten M Abtastwerte des Bildpunktes auf andere Weise angehoben wird.

7. Verfahren nach einem der vorhergehenden Ansprüche, **dadurch gekennzeichnet, dass** die Erfassung der Konturen durch eine Filteroperation und eine nachfolgende Schwellwertoperation erfolgt.

8. Verfahren nach Anspruch 7, **dadurch gekennzeichnet, dass** die Filterung einer durch einen Filter vom Typ (-1, 2, -1) durchgeführten Filterung entspricht.

9. Verfahren nach Anspruch 7, **dadurch gekennzeichnet, dass** die Filteroperation einer Canny-Deriche-Filterung entspricht.

10. Gerät zur Verbesserung der Konturen eines Videobildes, **dadurch gekennzeichnet, dass** es Folgendes umfasst:
einen Detektor (11), der die Konturen in dem Bild erfasst,
ein Abtastglied (12) für das Abtasten des Signals des Bildes bei einer Frequenz, die einem Vielfachen der Bildpunktfrequenz entspricht,
eine Recheneinheit (13) zum Modifizieren des abgetasteten Signals, so dass der Videopegel von wenigstens einem der Abtastwerte des der Kontur entsprechenden Bildpunktes für jede erfasste Kontur angehoben wird, wobei die Gesamtleuchtstärke des Bildpunktes erhalten bleibt, und
einen Digital-Analog-Wandler (15) zum Umwandeln des modifizierten abgetasteten Signals in ein analoges Signal, das zur Kathodenstrahlröhre geliefert wird.

## Revendications

1. Procédé de réhaussement des contours dans une image vidéo, **caractérisé en ce qu'**il comporte les étapes suivantes :
- détecter les contours dans l'image,
- échantillonner le signal de l'image à une fréquence multiple de la fréquence pixel;
- modifier le signal échantillonné de manière à augmenter, pour chaque contour détecté, le niveau vidéo d'au moins un des échantillons du pixel correspondant audit contour, l'énergie lumineuse globale dudit pixel étant conservée, et
- convertir ledit signal échantillonné modifié en un signal analogique qui est fourni au tube cathodique.

2. Procédé selon la revendication 1, **caractérisé en ce que**, pour modifier le signal, on supprime N échantillon(s) au pixel correspondant à chaque contour détecté, N étant supérieur ou égal à 1 et inférieur au nombre total d'échantillons du pixel, le niveau vidéo du ou des échantillons supprimés étant réparti entre les autres échantillons dudit pixel afin de conserver l'énergie lumineuse dudit pixel,
et **en ce qu'**on rajoute des échantillons à au moins l'un des pixels adjacents appartenant à la même ligne de pixels que le pixel de contour, le nombre total d'échantillons rajoutés étant égal à N, l'énergie lumineuse globale de chacun desdits pixels adjacents étant conservée.

3. Procédé selon la revendication 2, **caractérisé en ce qu'**on rajoute les N échantillons à un seul pixel adjacent et **en ce que** ledit pixel adjacent est celui ayant la plus grande différence de niveau vidéo avec le pixel de contour.

4. Procédé selon la revendication 1, **caractérisé en ce que**, pour modifier le signal, on augmente le niveau vidéo des M premiers ou M derniers échantillons du pixel correspondant à chaque contour détecté, M étant supérieur ou égal à 1 et inférieur au nombre total d'échantillons du pixel, et on abaisse le niveau vidéo des échantillons restants du pixel de manière à conserver l'énergie lumineuse dudit pixel.

5. Procédé selon la revendication 4, **caractérisé en ce que** le niveau vidéo des M échantillons est augmenté de la même quantité.

6. Procédé selon la revendication 4 ou 5, **caractérisé en ce qu'**on augmente le niveau vidéo des M premiers échantillons si la différence de niveau vidéo entre le pixel du contour et le pixel qui le précède sur la même ligne est supérieure à celle entre ledit pixel de contour et le pixel qui le suit sur la même ligne, et **en ce qu'**on augmente le niveau vidéo des M derniers échantillons du pixel sinon.

7. Procédé selon l'une des revendications précédentes **caractérisé en ce que** la détection de contours est opérée par une opération de filtrage suivie d'une opération de seuillage.

8. Procédé selon la revendication 7, **caractérisé en ce que** le filtrage est opéré par un filtre du type (-1, 2, -1).

9. Procédé selon la revendication 7, **caractérisé en ce que** l'opération de filtrage correspond au filtrage de Canny Deriche.

10. Dispositif pour rehausser les contours d'une image vidéo, **caractérisé en ce qu'**il comprend :
- un détecteur (11) pour détecter les contours dans l'image,
- un échantillonneur (12) pour échantillonner le signal de l'image à une fréquence multiple de la fréquence pixel;
- une unité de traitement (13) pour modifier le signal échantillonné de manière à augmenter, pour chaque contour détecté, le niveau vidéo d'au moins un des échantillons du pixel correspondant audit contour, l'énergie lumineuse globale dudit pixel étant conservée, et
- un convertisseur numérique/analogique (15) pour convertir ledit signal échantillonné modifié en un signal analogique qui est fourni au tube cathodique.
